# EUROPÄISCHE PATENTSCHRIFT

(11) **EP 0 738 792 B1**
(45) Veröffentlichungstag und Bekanntmachung des Hinweises auf die Patenterteilung: **01.12.1999**
(21) Anmeldenummer: 96105508.4
(22) Anmeldetag: 06.04.1996
(51) Int. Cl.: D01G 31/00, G01N 21/89

(54) **Vorrichtung an einer Karde zum Erkennen von störenden Partikeln, insbesondere Trashteilen, Nissen, Schalennissen, Noppen u. dgl.**
Apparatus for detecting of disturbing particles in particular impurities, knots, hull knots, neps and suchlike in a carding machine
Appareil pour détecter dans une machine de cardage des corps étrangers notamment des impuretés, des noeuds, des noeuds d'enveloppe de noyau, des nopes et semblables

(30) Priorität: 13.04.1995 DE 19514038; 08.02.1996 DE 19604499
(43) Veröffentlichungstag der Anmeldung: 23.10.1996
(73) Patentinhaber: Trützschler GmbH & Co. KG, 41199 Mönchengladbach (DE)
(72) Erfinder: Leifeld, Ferdinand, 47906 Kempen (DE)

(56) Entgegenhaltungen:
- EP-A- 0 331 039
- DE-A- 3 928 279
- GB-A- 2 210 907
- PATENT ABSTRACTS OF JAPAN vol. 17, no. 315 (C-1071), 16.Juni 1993 & JP-A-05 025713 (MURATA MACH LTD), 2.Februar 1993,
- PATENT ABSTRACTS OF JAPAN vol. 18, no. 344 (C-1218), 29.Juni 1994 & JP-A-06 081224 (OHARA KATSUNORI), 22.März 1994,

## Beschreibung

Die Erfindung betrifft eine Vorrichtung an einer Karde zum Erkennen von störenden Partikeln, insbesondere Trashteilen, Nissen, Schalennissen, Noppen u. dgl., in textilem Fasergut, z. B. Baumwolle, Chemiefasern u. dgl., bei der eine Meßstrecke zwischen Abstreichwalze und Quetschwalzen für das Fasergut vorgesehen ist, wobei an der Meßstrecke eine Kamera, z. B. eine Diodenzeilen-Kamera zur Ermittlung des Verschmutzungsgrades angeordnet ist und die Vorrichtung eine Beleuchtungseinrichtung und eine elektronische Auswerteeinrichtung (Bildverarbeitungseinheit) aufweist.

Bei einer bekannten Vorrichtung ist eine Kamera zum Erkennen der störenden Partikel vorgesehen (siehe DE-A-3 928 279 und EP-A-0 331 039).

Aufgabe der Erfindung ist es, eine solche Vorrichtung zum Erkennen von störenden Partikeln und die Auswertung der Meßergebnisse noch weiter zu verbessern.

Die Lösung dieser Aufgabe erfolgt durch die kennzeichnenden Merkmale des Anspruchs 1.

Dadurch, daß die Kamera dem frei übergehenden Faserflor zugeordnet ist, wird eine Erfassung (Bilderfassung) der Partikel ohne Beeinflussung durch die Garnitur der Abstreichwalze und durch die Förderflächen der Quetschwalzen erreicht. Auf diese Weise wird zugleich die Auswertung der Meßergebnisse auf die im Faserflor vorhandenen und erfaßten Partikel konzentriert, so daß insgesamt eine erheblich verbesserte Erkennung der störenden Partikel im Faserflor erreicht ist.

Weitere vorteilhafte Ausführungsformen der Erfindung sind Gegenstand der Ansprüche 2 bis 62.

Die Erfindung wird nachfolgend anhand von zeichnerisch dargestellten Ausführungsbeispielen näher erläutert.

Es zeigt:
- Fig. 1: schematisch Seitenansicht einer Karde mit einem Stütz- und Leitkörper für den Faserflor zur Aufnahme der erfindungsgemäßen Vorrichtung,
- Fig. 2: die Zuordnung des Stütz- und Leitkörpers gemäß Fig. 1 zu der Abstreich- oder zu den Quetschwalzen,
- Fig. 3: die Anordnung des Wagens mit der Kamera oder dem Umlenkspiegel im Innenhohlraum des Stütz- und Leitkörpers,
- Fig. 4: der Seilantrieb für den Wagen und die Schleppkette mit den Leiterkabeln für die Kamera und die Beleuchtungseinrichtung,
- Fig. 5: Draufsicht auf den Wagen und die Radführungen,
- Fig. 6: eine weitere Ausführungsform der erfindungsgemäßen Vorrichtung,
- Fig. 7: Blockschaltbild mit elektronischer Steuer- und Regeleinrichtung, an die die Kamera, die Beleuchtungseinrichtung und eine Bildauswertungseinrichtung angeschlossen sind,
- Fig. 8: die erfindungsgemäße Vorrichtung zwischen Quetschwalzen und Bandbildungseinrichtung mit Anordnung der Kamera unterhalb des Faserflors,
- Fig. 9: die erfindungsgemäße Vorrichtung zwischen Quetschwalzen und Bandbildungseinrichtung mit Anordnung der Kamera oberhalb des Faserflors und
- Fig. 10: die Verwendung von Lichtwellenleitern (Lichtleitkabel) für Kamera und Beleuchtungseinrichtung.

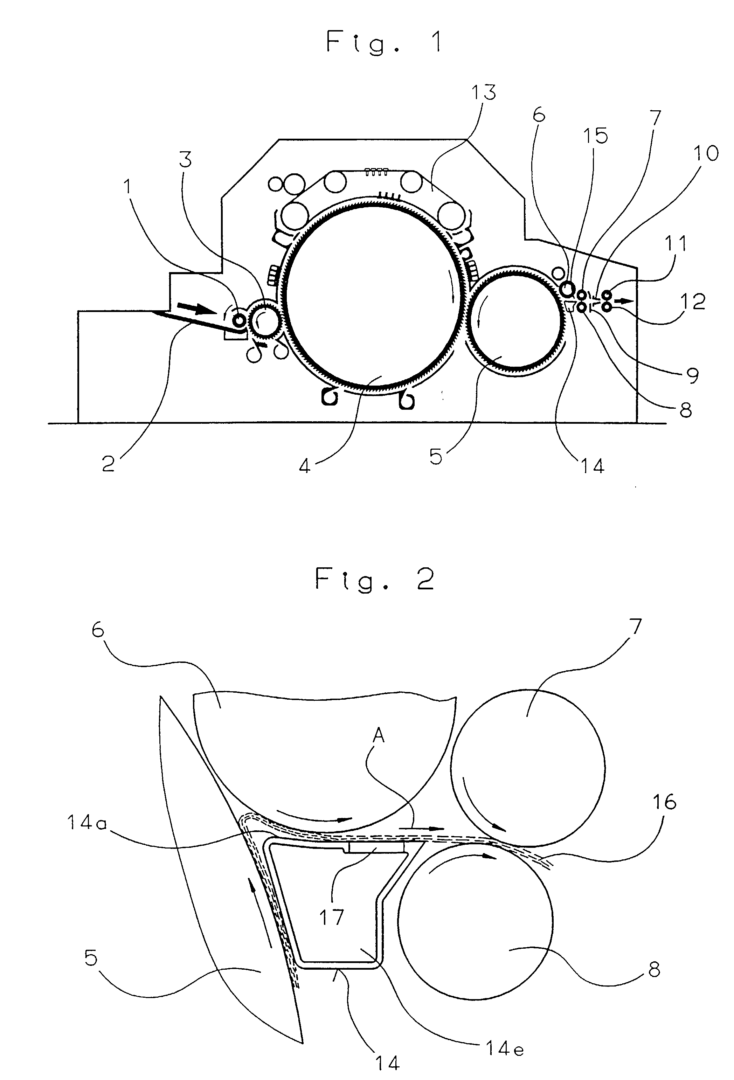

Fig. 1 zeigt eine Karde, z. B. Trützschler EXACTACARD DK 760 mit Speisewalze 1, Speisetisch 2, Vorreißer 3, Trommel 4, Abnehmer 5, Abstreichwalze 6, Quetschwalzen 7, 8, Vliesleitelement 9, Flortrichter 10, Abzugswalzen 11, 12 und Wanderdeckel 13. Unterhalb der Abstreichwalze 6 ist ein Stütz- und Leitkörper 14 angeordnet, die obere Quetschwalze 7 ist nahe angrenzend an die Abstreichwalze 6 angeordnet. Die Drehrichtung der Trommel 4 und der Walzen ist jeweils durch gebogene Pfeile dargestellt. Mit 15 ist der Bereich bezeichnet, in dem der abgelöste Faserflor 16 (sh. Fig. 2) von der Abstreichwalze 6 auf die Quetschwalzen 7, 8 übergeht.

Fig. 2 zeigt, daß der Stütz- und Leitkörper 14 im wesentlichen einen viereckförmigen Querschnitt aufweist. Die obere Fläche 14a ist leicht konkav gebogen. Der Krümmungsradius der Biegung der Fläche 14a ist größer als der Krümmungsradius der Abstreichwalze 6. Der Pfeil A gibt die Laufrichtung des Faservlieses 16 an. Der vordere Endbereich 14b weist eine Kante auf, der hintere Endbereich 14c ist abgerundet. Die Kante vermeidet die Ablagerung von Verunreinigungen, z. B. Honigtau. Der Kontakt-Gleitbereich 14d (sh. Fig. 3) der Fläche 14a wird durch das darübergleitende Vlies 16 gereinigt, z. B. von Trash. Die Querschnittsform des Elements 14 ist den Luftströmungsverhältnissen im Bereich zwischen dem Abnehmer 5, der Abstreichwalze 6 und den Quetschwalzen 7, 8 angepaßt. Das Element 14 dient als Stütz- und Leitkörper für das Faservlies 16. Der Endbereich 14b ist als Stützfläche für das Faservlies 16 ausgebildet. Außerdem dient die Fläche 14a im Endbereich 14b als Leitfläche für das Vlies 16. Die Endbereiche 14b bzw. 14c befinden sich jeweils auf unterschiedlichen Seiten in bezug auf die senkrechte Mitte (Durchmesser) der Abstreichwalze 6 in Faserlaufrichtung A gesehen. Das Element 14 ist als Gehäuse ausgebildet, wobei im Kontaktgleitbereich 14b ein durchsichtiges Fenster 17 vorhanden ist. Das Faservlies befindet sich zunächst auf der Gamitur des Abnehmers 5, wird im Walzenspalt zwischen Abnehmer 5 und Abstreichwalze 6 auf die Gamitur 6a der Abstreichwalze 6 um- und übergeleitet, wird etwas nach dem Bereich des senkrechten Durchmessers von der Abstreichwalze 6 abgelöst, wird im Kontakt-Gleitbereich 14d auf der Fläche 14a in Richtung geführt, fließt im Anschluß an den Endbereich 14b völlig frei und tritt schließlich in den Walzenspalt zwischen den Quetschwalzen 7, 8 ein und durch diesen hindurch. Die obere Fläche 14a des Elements 14 ist der Gamitur 6a der Abstreichwalze 6 zugewandt. Das Element 14 ist mit seinem einen Endbereich 14c dem Walzenspalt zwischen Abnehmer 5 und Abstreichwalze 6 zugeordnet. Der andere Endbereich 14b ist in dem Bereich zwischen Abstreichwalze 6 und Quetschwalzen 7, 8 angeordnet, wobei die Kante in Richtung auf den Walzenspalt zwischen den Quetschwalzen 7, 8 ausgerichtet ist. Das Element 14 ist ein Strangpreßprofil, z. B. aus Aluminium, mit einem innenliegenden Ruheraum 14e.

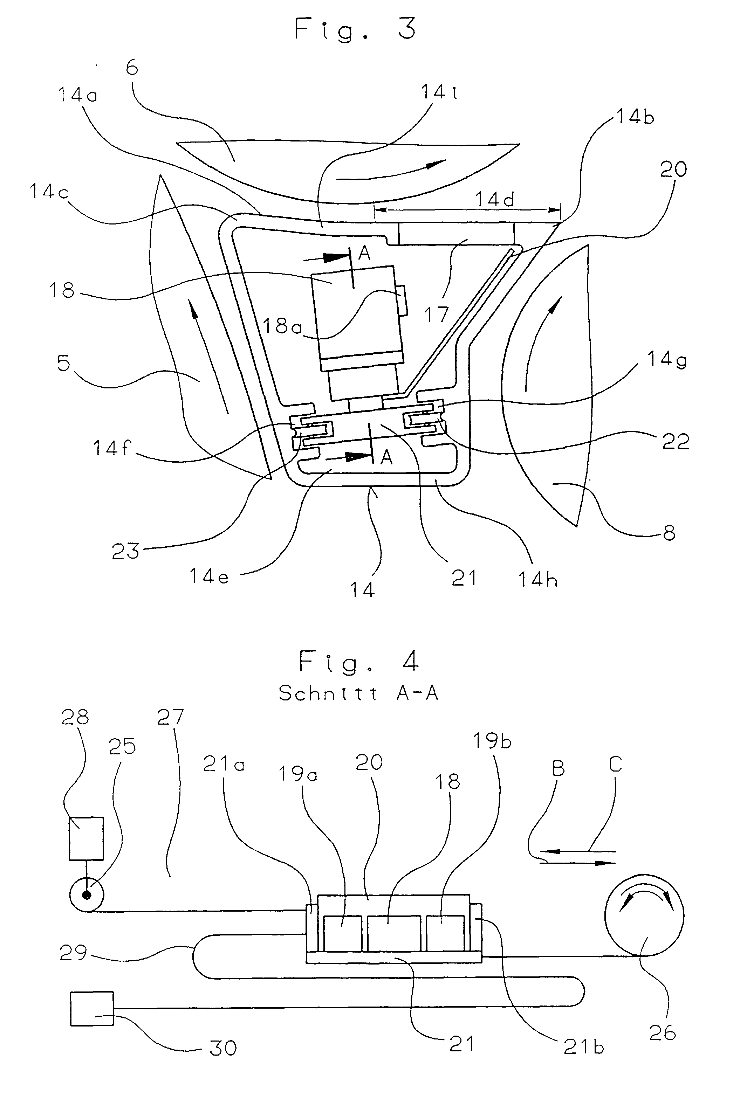

Nach Fig. 3 sind im Innenraum 14e des Gehäuses 14 eine Kamera 18, z. B. Diodenzeilenkamera, eine Beleuchtungseinrichtung 19 (sh. Fig. 4), z. B. aus mehreren Leuchtdioden und ein Umlenkspiegel 20 auf einem Wagen 21 angeordnet. Der Umlenkspiegel 20 ist in einem Winkel zwischen Objektiv 18a der Kamera 18 und der Beleuchtungseinrichtung 19 einerseits und der Innenseite des Fensters 17 andererseits angeordnet. Auf der Außenseite des Fensters 17 läuft der Faserflor 16. Die Räder 22, 23, 24 des Wagens 21 laufen in Führungen 14f, 14g in der Innenwand des Gehäuses 14 in Richtung B, C (sh. Pfeile in Fig. 4) über die Breite der Maschine.

Gemäß Fig. 4 sind zwei drehbare Seilrollen 25, 26 vorgesehen, um die ein Seil 27 umläuft, das jeweils mit einem Ende an den Stimseiten 21a, 21b des Wagens 21 angreift. Die Rolle 25 wird durch einen Motor 28 drehbar angetrieben, so daß der Wagen 21 in Richtung der Pfeile B und C hin- und herbewegt wird. Der obere Teil des Seils 27 befindet sich in dem Bereich zwischen Kamera 18 und Deckwand 14i des Elements 14. Auf dem Wagen sind die Kamera 18, die Beleuchtungseinrichtungen 19a, 19b (die z. B. aus einer Mehrzahl von Leuchtdioden, Blitzleuchten o. dgl. bestehen können) und der Umlenkspiegel 20 befestigt. An eine Stirnseite 21a des Wagens 21 ist ein Ende eines biegsamen, flexiblen Flachleiterkabels 29 angeschlossen, das nach Art einer auf- und abrollbaren Schleppkette ausgebildet ist und dessen anderes Ende an die elektronische Steuer- und Regeleinrichtung 30 angeschlossen ist. Das Flachleiterkabel 29 enthält die Verbindungsleitungen von der Steuer- und Regeleinrichtung 30 und von einer (nicht dargestellten) Stromversorgungseinrichtung zu der Kamera 18 und der Beleuchtungseinrichtung 19. Das Flachleiterkabel 29 besitzt zwei Umlenkungen um 180° und der untere Teil des Flachleiterkabels 29 befindet sich in dem Bereich zwischen der Bodenwand 14h des Elements 14 und dem Wagen 21.

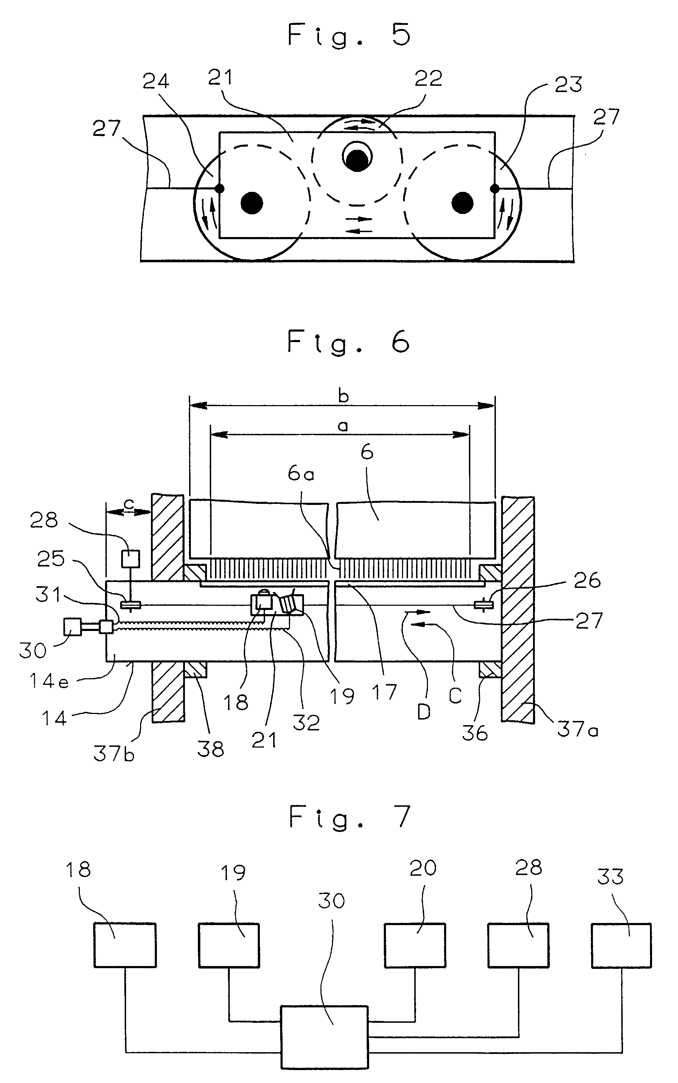

Entsprechend Fig. 5 besitzt der Wagen 21 drei Räder 21, 22 und 23, die jeweils um eine vertikale Achse drehbar sind. Die Räder 21 und 23 laufen in der Ausnehmung 14f und das Rad 22 läuft in der Ausnehmung 14g im Innenraum 14e.

Ein Ende des Elements 14 ist nach Fig. 6 in einem Endstück 36 einschiebbar gelagert, das an der einen Gestellwand 37a der Karde befestigt ist. Der Innenhohlraum des Endstücks und der Außenmantel des Elements 14 sind formschlüssig aufeinander abgestimmt. Der Endbereich liegt mit seiner Stirnfläche an der Innenfläche der Gestellwand 37a an. Das andere Ende des Elements 14 ist in einem anderen Endstück 38 (Leitprofil) durchschiebbar gelagert, das an der anderen Gestellwand 37b der Karde befestigt ist. Die Innenhohlräume des Endstücks 36 und des Leitprofils 38 und der Außenmantel des Elements 14 sind formschlüssig aufeinander abgestimmt, so daß das Element 14 im Betrieb festgelagert ist. Es wird durch (nicht dargestellte) Schrauben gegen Verschieben gesichert. Das Ende ragt aus der Gestellwand 37b in einem Abstand c hinaus, wodurch ein Griff zum Auswechseln gebildet ist. Das Element 14, das in Fig. 6 unterbrochen dargestellt ist, ist einstückig ausgebildet. Im Innenraum 14e sind über die Breite die beiden drehbaren Seitenrollen 25, 26 vorhanden, um die das Seil 27 umläuft, das an dem Wagen 21 angreift und das in Richtung der Pfeile C, D beweglich ist. Auf dem Wagen 21 sind die Kamera 18 und die Beleuchtungseinrichtung 19 in Richtung auf das Fenster 17 zielend befestigt. Die Kamera 18 ist über eine Leitung 31 und die Beleuchtungseinrichtung 19 ist über eine Leitung 32 mit der Steuer- und Regeleinrichtung 30 verbunden. Mit b ist die Breite der Abstreichwalze 6 und mit a ist der mit Gamitur 6a versehene Bereich der Abstreichwalze 6 bezeichnet.

Nach Fig. 7 ist eine elektronische Steuer- und Regeleinrichtung 30 vorgesehen, an die u. a. die Kamera 18, die Beleuchtungseinrichtung 19, eine Bildauswerteeinrichtung 20, die Antriebseinrichtung, z. B. Elektromotor 28 für den Wagen 21 und eine Einrichtung 33 zur Drehzahlmessung der Abstreichwalze 6 angeschlossen.

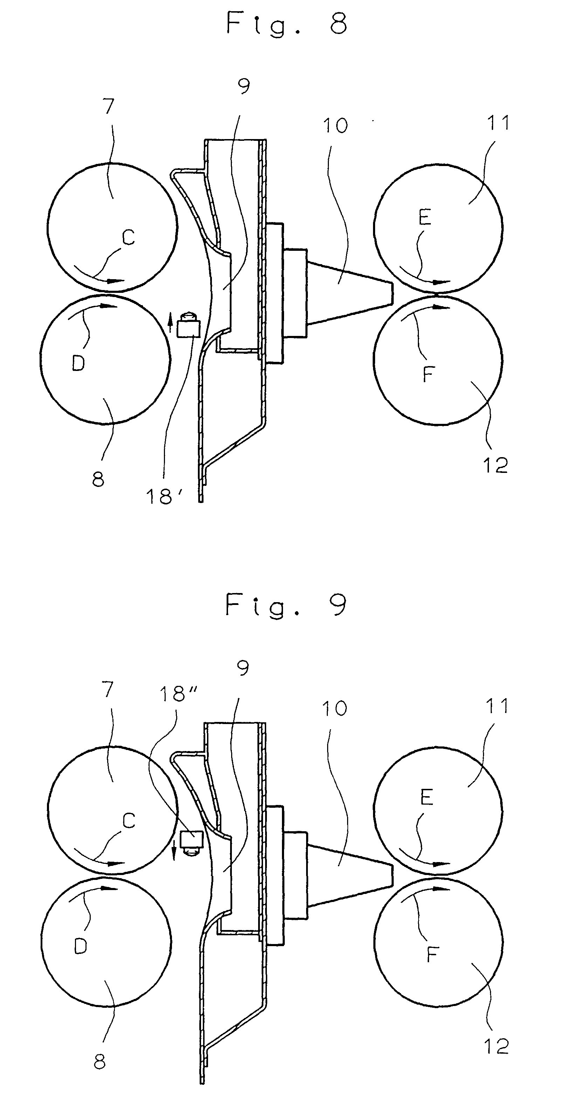

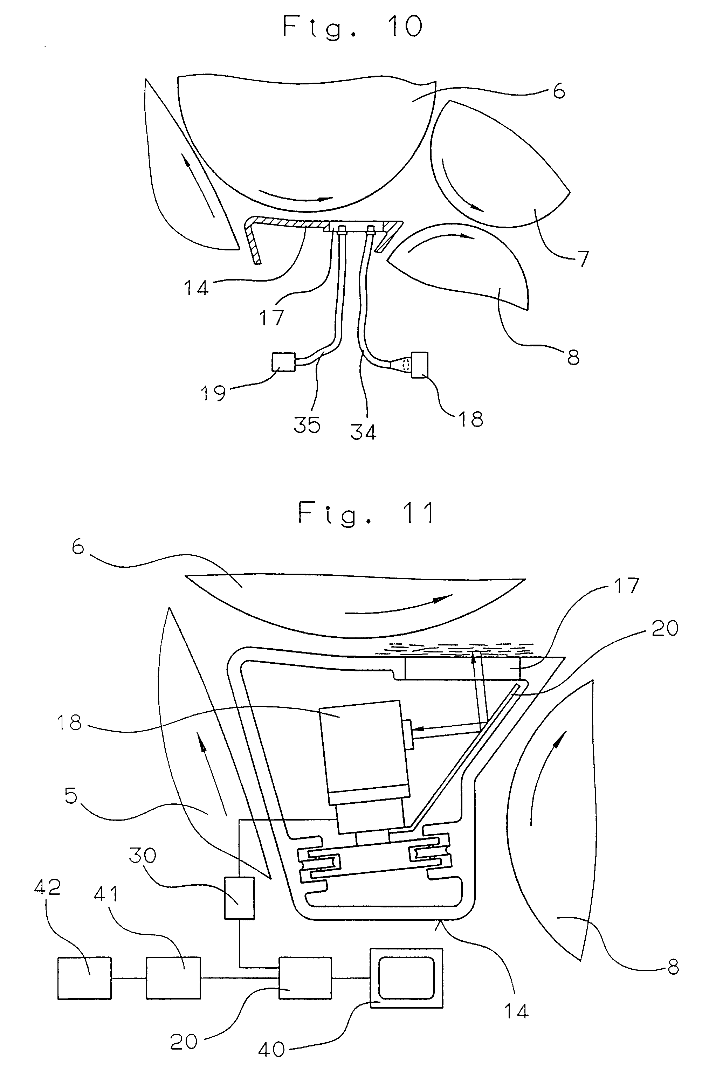

Die Fig. 8 und 9 zeigen die Quetschwalzen 7, 8, denen die Bandbildungseinrichtung 9, z. B. Trützschler-Webspeed, mit Bandtrichter 10 und Abzugswalzen 11, 12 nachgeordnet ist. Der Faserflor 16 tritt über die Breite der Maschine aus den Quetschwalzen 7, 8 aus, tritt durch eine Öffnung in der Bandbildungseinrichtung 9 hindurch und wird im Bandtrichter 10 zu einem Faserband zusammengefaßt. Nach Fig. 8 ist eine Kamera 18' unterhalb des Faserflors 16 (sh. Fig. 2) und nach Fig. 9 ist eine Kamera 18'' oberhalb des Faserflors (sh. Fig. 2) angeordnet.

Nach Fig. 10 sind die Kamera 18 und die Beleuchtungseinrichtung 19 ortsfest angeordnet. An das Bildeintrittselement (Objektiv) der Kamera 18 und an das Lichtaustrittselement der Beleuchtungseinrichtung 19 ist jeweils das eine Ende eines Lichtwellenleiters (LWL) 34 bzw. 35, z. B. aus Glasfaser, angeschlossen. Das jeweils andere Ende der Lichtwellenleiter 34 und 35 ist dem Glasfenster 17 zugeordnet und ist dort in Richtung über die Breite a der Abstreichwalze 6 bzw. der Maschine beweglich.

Die erfindungsgemäße Vorrichtung ermöglicht eine Nissenzählung online, statt Stichproben im Labor. Die Vorrichtung z. B. Trützschler NEPCONTROL NCT, ist ein Online-Meßsystem zur Erkennung von Trash, Samenkompartikeln und Nissen. Im Bereich der Vliesabnahme unter der Abstreichwalze 6 changiert in einem Vliesführungsprofil 14 eine Videokamera 18 über die Arbeitsbreite der Karde. Die Kamera 18 liefert, selbst bei einer Produktionsgeschwindigkeit von 300 m/min, scharfe Bilder des Vlieses 16 und übermittelt sie nach Fig. 11 an den Rechner 30 des NEPCONTROL NCT. Dieser wertet die Bilder nach Anzahl, Art und Größe der Störpartikel aus. Dabei kann er Trash- und Samenkompartikel sowie Nissen unterscheiden. Die Ergebnisse werden über die Maschinensteuerung 49, z. B. Trützschler Card-Commander, im Display 40 angezeigt oder zur weiteren Verarbeitung an das (nicht dargestellte) Trützschler-Sliver Information System KIT übergeben.

Die erfindungsgemäße Vorrichtung ist einfach in eine Karde ein- bzw. auszubauen. So ist eine periodische Messung an wechselnden Karden möglich.

Zur Messung wird der Faserflor gefördert. Durch das Sichtfenster 17 wird der Faserflor von der Kamera 18 erfaßt. Dabei werden Auflicht (sh. Fig. 11) und Blitzbeleutungen kombiniert. Die Auswertung erfolgt nach dem Prinzip des Soll/Ist-Vergleichs. Als Sollparameter wird die Reflektionsintensität bezogen auf die Aufstrahlintensität herangezogen. Die Charakteristik der Baumwolle wird vom System automatisch ermittelt und als Referenz verwendet. Material mit abweichender Charakteristik wird erkannt, wenn die Ausdehnung z.B. 5mm in der kleinsten Achse beträgt.

Ein Auflichtmodul umfaßt eine Halbleiter-Blitzbeleutung mit hoher Homogenität, eine kommandogesteuerte Hochgeschwindigkeits-Meßkamera 18 (mit digitalem Datenausgang (z. B. nach DE-A- 43 13 621)) und einen Umlenkspiegel 20 zur Reduzierung der Bauhöhe. Ein Durchlichtmodul umfaßt eine großflächige Halbleiterblitzbeleuchtung mit hoher Intensität.

Im Betrieb kann für die Nissen-Fremdfaser und Fremdpartikelerkennung mit Durchlicht und Auflicht gearbeitet werden. Es werden zwei Bilder in sehr kurzer Aufeinanderfolge aufgenommen, einmal im Durchlicht und einmal im Auflicht. Beide Bilder werden kombiniert und gemeinsam ausgewertet. Das Licht wird blitzweise eingeschaltet und gesteuert von der Kamera 18 oder deren Steuerung. Es kann für die Einzelaufnahmen Licht unterschiedlicher Wellenlängen eingesetzt werden. Dabei kann mehr als eine Beleutungseinrichtung für eine Aufnahme verwendet werden. Beispielsweise kann das Auflichtmodul mehr als eine Beleutungseinrichtung aufweisen. Die Beleuchtung kann aus verschiedenen Richtungen erfolgen. Auch kann die Beleuchtung von verschiedenen Seiten (Durchlicht und Auflicht) vorgenommen werden. Es können zur Beleuchtung Lichtquellen mit verschiedenen Wellenlängen Anwendung finden. Auch können die verschiedenen Richtungen, Seiten und Wellenlängen miteinander kombiniert werden. Es können verschiedene Beleuchtungszeiten (Blitzzeiten) eingestellt werden.

Nach Fig. 11 stehen die Kamera 18 und die Beleuchtungseinrichtungen über den Rechner 30 mit der Bildverarbeitungseinrichtung 20 in Verbindung, an die ein Monitor 40, ein Steuerelement 41, z. B. Maschinensteuerung, und eine Einrichtung 42 (Stelleinrichtung) zur Beeinflussung der Zahl an Nissen, Trashteilen und/oder Samenpartikeln im Faserflor geschlossen sind. Die Einrichtung 42 kann Maßnahmen zur Änderung der Nissenzahl im Faserflor auslösen, z. B. den Abstand zwischen den Deckelgamituren und der Trommelgamitur der Karde, die Drehzahl der Trommel, den Abstand eines Messers von einer Walze, eines Leitelements o.dgl. ändern.

Mit der erfindungsgemäßen Vorrichtung ist eine automatische Erfassung und Reduzierung der Nissenzahl im Faserflor ermöglicht. Wichtig ist die Erfassung an dem Faserflor, wenn er von der Abstreichwalze abgelöst und dadurch frei ist. Die Erfindung wird am Beispiel einer Karde erläutert. Sie umfaßt auch andere Maschinen, bei denen ein Faserflor hergestellt wird, z. B. eine Krempel.

## Patentansprüche

1. Vorrichtung an einer Karde zum Erkennen von störenden Partikeln, insbesondere Trashteilen, Nissen, Schalennissen, Noppen u. dgl., in textilem Fasergut, z. B. Baumwolle, Chemiefasern u. dgl., bei der eine Meßstrecke zwischen Abstreichwalze und Quetschwalzen für das Fasergut vorgesehen ist, wobei an der Meßstrecke eine Kamera, z. B. eine Diodenzeilen-Kamera, zur Ermittlung des Verschmutzungsgrades angeordnet ist, die Vorrichtung eine Beleuchtungseinrichtung und eine elektronische Auswerteeinrichtung (Bildverarbeitungseinheit) aufweist und die Kamera dem zwischen Abstreichwalze und Quetschwalzen übergehenden Faserflor zugeordnet ist, dadurch gekennzeichnet, daß unterhalb der Abstreichwalze (6) ein ortsfester Stütz- und Leitkörper (14) für das Fasergut (16) vorhanden ist, dessen obere Fläche (14a) der Abstreichwalze (6) zugewandt ist, der Stütz- und Leitkörper (14) als Gehäuse ausgebildet ist und die Kamera in dem Innenraum (14e) des Gehäuses angeordnet ist.

2. Vorrichtung nach Anspruch 1, dadurch gekennzeichnet, daß die Kamera (18) in einem Abstand zur der Garnitur (6a) der Abstreichwalze (6) und zu den Mantelflächen der Quetschwalzen (7, 8) angeordnet ist.

3. Vorrichtung nach Anspruch 1 oder 2, dadurch gekennzeichnet, daß die Kamera (18) auf der der Abstreichwalze (6) abgewandten Seite des Faserflors (16) angeordnet ist.

4. Vorrichtung nach einem der Ansprüche 1 bis 3, dadurch gekennzeichnet, daß die Kamera (18) auf der der einen Quetschwalze (7) abgewandten Seite des Faserflors (16) angeordnet ist.

5. Vorrichtung nach einem der Ansprüche 1 bis 4, dadurch gekennzeichnet, daß die Kamera (18) unterhalb der Abstreichwalze (6) angeordnet ist.

6. Vorrichtung nach einem der Ansprüche 1 bis 5, dadurch gekennzeichnet, daß der eine Endbereich (14b) in dem Bereich zwischen Abstreichwalze (6) und Quetschwalzen (7, 8) angeordnet ist.

7. Vorrichtung nach einem der Ansprüche 1 bis 6, dadurch gekennzeichnet, daß die Deckwand (14i) des Stütz- und Leitkörpers (14) einen durchsichtigen Bereich (6, 7) aufweist, z. B. aus Glas o. dgl.

8. Vorrichtung nach einem der Ansprüche 1 bis 7, dadurch gekennzeichnet, daß das Gehäuse ein Strangpreßprofil, z. B. aus Aluminium ist.

9. Vorrichtung nach einem der Ansprüche 1 bis 8, dadurch gekennzeichnet, daß der Stütz- und Leitkörper (14) ein Strangpreßprofil ist, wobei der Innenraum (14a) zwei Führungsräume (14f, 14g) für den Wagen (21) aufweist.

10. Vorrichtung nach einem der Ansprüche 1 bis 9, dadurch gekennzeichnet, daß das Gehäuse (14) geschlossen ist.

11. Vorrichtung nach einem der Ansprüche 1 bis 10, dadurch gekennzeichnet, daß die Glasfläche als Fenster (17) ausgbeildet ist.

12. Vorrichtung nach einem der Ansprüche 1 bis 11, dadurch gekennzeichnet, daß im Innenraum (14e) des Gehäuses (14) Führungselemente, z. B. Schienen, Ausnehmungen (14f, 14g) o. dgl., vorhanden sind.

13. Vorrichtung nach einem der Ansprüche 1 bis 12, dadurch gekennzeichnet, daß sich das Gehäuse (14) mindestens über die Breite der Karde (Arbeitsbreite) erstreckt.

14. Vorrichtung nach einem der Ansprüche 1 bis 13, dadurch gekennzeichnet, daß durch die Führungselemente (14f, 14g) ein Fahrschlitten, Wagen (21) o. dgl. geführt ist.

15. Vorrichtung nach einem der Ansprüche 1 bis 14, dadurch gekennzeichnet, daß die Kamera (18) und die Beleuchtung (19), z. B. Leuchtdioden, auf oder an dem Fahrschlitten, Wagen (21) o. dgl. angeordnet sind.

16. Vorrichtung nach einem der Ansprüche 1 bis 15, dadurch gekennzeichnet, daß dem Fahrschlitten, Wagen (21) o. dgl. eine Förder- und Transporteinrichtung (25, 26, 27) für die Verschiebung (B, C) zugeordnet ist.

17. Vorrichtung nach einem der Ansprüche 1 bis 16, dadurch gekennzeichnet, daß die Förder- und Transportvorrichtung zwei Umlenkrollen (25, 26) und ein Seil (28) oder Riemen mit einem Mitnehmer für den Fahrschlitten, Wagen (21) o. dgl. umfaßt.

18. Vorrichtung nach einem der Ansprüche 1 bis 17, dadurch gekennzeichnet, daß einer Umlenkrolle (25) eine Antriebseinrichtung, z. B. Antriebsmotor (28), zugeordnet ist.

19. Vorrichtung nach einem der Ansprüche 1 bis 18, dadurch gekennzeichnet, daß die Antriebseinrichtung (28) an eine elektronische Steuereinrichtung (30) angeschlossen ist.

20. Vorrichtung nach einem der Ansprüche 1 bis 19, dadurch gekennzeichnet, daß der Steuereinrichtung (28) Endschalter und/oder Sensoren für die Hin- und Herbewegung des Fahrschlittens, Wagens (21) o. dgl. zugeordnet sind.

21. Vorrichtung nach einem der Ansprüche 1 bis 20, dadurch gekennzeichnet, daß die Kamera (18) und/oder die Beleuchtungseinrichtung (19) über mindestens ein flexibles Kabel (29; 31, 32), z. B. federnde Wendel, Flachteilerkabel o. dgl., mit einer Anschlußeinrichtung, z. B. an eine Auswerteinrichtung, Energieversorgung o. dgl., verbunden ist.

22. Vorrichtung nach einem der Ansprüche 1 bis 21, dadurch gekennzeichnet, daß das Kabel (29; 31, 32) durch Öffnungen in der Wand des Gehäuses (14) durchgeführt ist.

23. Vorrichtung nach einem der Ansprüche 1 bis 22, dadurch gekennzeichnet, daß die Durchführung eine Abdichtung gegen Staub aufweist.

24. Vorrichtung nach einem der Ansprüche 1 bis 23, dadurch gekennzeichnet, daß das flexible Kabel (29; 31, 32) im Innenraum des Gehäuses (14) vorhanden ist.

25. Vorrichtung nach einem der Ansprüche 1 bis 24, dadurch gekennzeichnet, daß der Öffnung in der Gehäusewand mindestens eine Steckverbindung für das Kabel (29; 31, 32) zugeordnet ist.

26. Vorrichtung nach einem der Ansprüche 1 bis 25, dadurch gekennzeichnet, daß das Kabel eine Leitung (31) für die Kamera (18) und eine Leitung (32) für die Beleuchtungseinrichtung (19) umfaßt.

27. Vorrichtung nach einem der Ansprüche 1 bis 26, dadurch gekennzeichnet, daß mindestens eine abgedichtete Stirnfläche des Gehäuses (14) entfernbar ist.

28. Vorrichtung nach einem der Ansprüche 1 bis 27, dadurch gekennzeichnet, daß das Stütz- und Leitelement (16) unter der Abstreichwalze (6) ein- und ausschiebbar ist.

29. Vorrichtung nach einem der Ansprüche 1 bis 28, dadurch gekennzeichnet, daß das Gehäuse (14) unter der Abstreichwalze (6) ein- und ausschiebbar ist.

30. Vorrichtung nach einem der Ansprüche 1 bis 29, dadurch gekennzeichnet, daß das Stütz- und Leitelement (14) in seiner Längsrichtung verschiebbar ist.

31. Vorrichtung nach einem der Ansprüche 1 bis 30, dadurch gekennzeichnet, daß das Maschinengestell im Bereich der Vliesabnahme seitlich Öffnungen zur Befestigung des Stütz- und Leitelements (14) aufweist.

32. Vorrichtung nach einem der Ansprüche 1 bis 31, dadurch gekennzeichnet, daß das Stütz- und Leitelement durch die Öffnungen durchschiebbar ist.

33. Vorrichtung nach einem der Ansprüche 1 bis 32, dadurch gekennzeichnet, daß die Kabelverbindung (29; 31) zu der Kamera (18) mindestens einen Mehrfachstecker aufweist.

34. Vorrichtung nach einem der Ansprüche 1 bis 33, dadurch gekennzeichnet, daß die Antriebseinrichtung (28) für den Wagen (21) außerhalb (c) des Gehäuses (14) angeordnet ist.

35. Vorrichtung nach einem der Ansprüche 1 bis 34, dadurch gekennzeichnet, daß der oder die Mehrfachstecker einer Stirnwand des Gehäuses (14) angeordnet ist.

36. Vorrichtung nach einem der Ansprüche 1 bis 35, dadurch gekennzeichnet, daß der Innenraum des Gehäuses mit sauberer Druckluft beaufschlagt ist.

37. Vorrichtung nach einem der Ansprüche 1 bis 36, dadurch gekennzeichnet, daß in der Gehäusewand Kühlöffnungen für Luftdurchtritt vorhanden sind.

38. Vorrichtung an einer Karde zum Erkennen von störenden Partikeln, insbesondere Trashteilen, Nissen, Schalennissen, Noppen u. dgl., in textilem Fasergut, z. B. Baumwolle, Chemiefasern u. dgl., bei der eine Meßstrecke nach den Quetschwalzen für das Fasergut vorgesehen ist, wobei an der Meßstrecke eine Kamera, z. B. eine Diodenzellen-Kamera zur Ermittlung des Verschmutzungsgrades angeordnet ist und die Vorrichtung eine Beleuchtungseinrichtung und eine elektronische Auswerteeinrichtung (Bildverarbeitungseinheit) aufweist, insbesondere nach einem der Ansprüche 1 bis 39, dadurch gekennzeichnet, daß die Kamera (18', 18'') zwischen den Quetschwalzen (7, 8) und der Bandbildungseinrichtung (9) angeordnet ist.

39. Vorrichtung nach einem der Ansprüche 1 bis 38, dadurch gekennzeichnet, daß die Kamera dem zwischen Quetschwalzen (7, 8) und Bandbildungseinrichtung (9) frei übergehenden Faserflor zugeordnet ist.

40. Vorrichtung nach einem der Ansprüche 1 bis 39, dadurch gekennzeichnet, daß die Kamera (18', 18") in einem Abstand zu den Mantelflächen der Quetschwalzen (7, 8) angeordnet ist.

41. Vorrichtung nach einem der der Ansprüch 1 bis 40, dadurch gekennzeichnet, daß die Kamera (18') unterhalb des Faserflors angeordnet ist.

42. Vorrichtung nach einem der Ansprüche 1 bis 41, dadurch gekennzeichnet, daß die Kamera (18") oberhalb des Faserflors angeordnet ist.

43. Vorrichtung nach einem der Ansprüche 1 bis 42, dadurch gekennzeichnet, daß zwischen der Kamera (18) und dem Faserflor (16) mindestens ein Umlenkspiegel (20) angeordnet ist.

44. Vorrichtung nach einem der Ansprüche 1 bis 43, dadurch gekennzeichnet, daß zwischen der Beleuchtungseinrichtung (19; 19a, 19b) und dem Faserflor (16) mindestens ein Umlenkspiegel (20) angeordnet ist.

45. Vorrichtung nach einem der Ansprüche 1 bis 44, dadurch gekennzeichnet, daß die Kamera (18) auf den von der Abtreibwalze (6) abgelösten Faserflor (16) ausgerichtet ist.

46. Vorrichtung nach einem der Ansprüche 1 bis 45, dadurch gekennzeichnet, daß der von der Beleuchtungseinrichtung (19) oder dem Umlenkspiegel (20) in Richtung auf den Faserflor (16) einstrahlende Lichtstrahl das Glasfenster (17) flächig ausleuchtet.

47. Vorrichtung nach einem der Ansprüche 1 bis 46, dadurch gekennzeichnet, daß an die elektronische Steuer- und Regeleinrichtung (30) mindestens die Kamera (18), die Beleuchtungseinrichtung (19), eine Bildauswerteeinrichtung (20) und die Antriebseinrichtung (28) für den Wagen (21) angeschlossen sind.

48. Vorrichtung nach einem der Ansprüche 1 bis 47, dadurch gekennzeichnet, daß ein biegsames Flachleiterkabel (29) für die Verbindungsleitung (31) zur Kamera (18) und für die Verbindungsleitung (32) zur Beleuchtungseinrichtung (19) vorhanden ist.

49. Vorrichtung nach einem der Ansprüche 1 bis 48, dadurch gekennzeichnet, daß der Umlenkspiegel (20) auf oder an dem Schlitten, Wagen (21) o. dgl. befestigt ist.

50. Vorrichtung nach einem der Ansprüche 1 bis 49, dadurch gekennzeichnet, daß die Kamera (18) den über das Glasfenster (17) gleitenden Faserflor (16) flächig erfaßt.

51. Vorrichtung insbesondere nach einem der Ansprüche 1 bis 50, dadurch gekennzeichnet, daß die Kamera (18) und/oder die Beleuchtungseinrichtung (19) ortsfest angeordnet und an die Kamera (18) und/oder an die Beleuchtungseinrichtung (19) Lichtwellenleiter (34, 35), z. B. Glasfaserkabel, angeschlossen sind.

52. Vorrichtung nach einem der Ansprüche 1 bis 51, dadurch gekennzeichnet, daß die Kamera (18) den Faserflor (16) mit Auflicht erfaßt.

53. Vorrichtung nach einen der Ansprüche 1 bis 52, dadurch gekennzeichnet, daß eine Durchlicht- und Auflichtermittlung erfolgt.

54. Vorrichtung nach einem der Ansprüche 1 bis 53, dadurch gekennzeichnet, daß der Rechner (30) und die Bildauswertung (20) mit einer Stelleinrichtung zur Regulierung des Reinigungsgrades des Fasermaterials (2,16) verbunden ist.

55. Vorrichtung nach einem der Ansprüche 1 bis 54, dadurch gekennzeichnet, daß der Bildauswertung (20) ein Steuerelement (41) und ein Stellelement (42) nachgeordnet sind.

56. Vorrichtung nach einem der Ansprüche 1 bis 55, dadurch gekennzeichnet, daß das Stellelement (42) die Zahl an Nissen, Tashpartikeln und/oder Samenkompartikeln im Faserflor (16) zu ändern vermag.

57. Vorrichtung nach einem der Ansprüche 1 bis 56, dadurch gekennzeichnet, daß die Kamera (18) die Nissenzahl in dem von der Walze abgelösten, freien Faserflor (16) zu ermitteln vermag.

58. Vorrichtung nach einem der Ansprüche 1 bis 57, dadurch gekennzeichnet, daß das Stellelement (42) die Nissenzahl im Faserflor (16) in Reaktion auf die in dem abgelösten, freien Faserflor (16) ermittelten Nissenzahl automatisch zu ändern vermag.

59. Vorrichtung nach einem der Ansprüche 1 bis 57, dadurch gekennzeichnet, daß das Stellelement (42) den Abstand zwischen der Garnitur der Deckelstäbe des Deckels (13) und der Garnitur der Trommel (4) einzustellen vermag.

60. Vorrichtung nach einem der Ansprüche 1 bis 58, dadurch gekennzeichnet, daß das Stellelement (42) die Drehzahl der Trommel (4) einzustellen vermag.

## Claims

1. Apparatus at a carding machine, for detecting undesired particles, especially pieces of trash, neps, husk neps, burls and the like, in textile fibre material, for example cotton, synthetic fibres and the like, wherein a measurement zone is provided between a stripper roller and nip rollers for the fibre material, there being arranged at the measurement zone a camera, for example a diode line camera, for determination of the degree of contamination, the apparatus having an illumination device and an electronic evaluating device (image-processing unit) and the camera being associated with the fibre web passing between the stripper roller and the nip rollers, characterised in that below the stripper roller (6) there is provided a stationary supporting and guiding body (14) for the fibre material (16), the upper surface (14a) of which faces the stripper roller (6), the supporting and guiding body (14) is in the form of a housing and the camera is arranged in the interior (14e) of the housing.

2. Apparatus according to claim 1, characterised in that the camera (18) is arranged spaced apart from the clothing (6a) of the stripper roller (6) and from the outer surfaces of the nip rollers (7, 8).

3. Apparatus according to claim 1 or claim 2, characterised in that the camera (18) is arranged on the side of the fibre web (16) that faces away from the stripper roller (6).

4. Apparatus according to any one of claims 1 to 3, characterised in that the camera (18) is arranged on the side of the fibre web (16) that faces away from one (7) of the nip rollers.

5. Apparatus according to any one of claims 1 to 4, characterised in that the camera (18) is arranged below the stripper roller (6).

6. Apparatus according to any one of claims 1 to 5, characterised in that one (14b) of the end regions is arranged in the region between the stripper roller (6) and the nip rollers (7, 8).

7. Apparatus according to any one of claims 1 to 6, characterised in that the top wall (14i) of the supporting and guiding body (14) has a transparent region (6, 7), for example made of glass or the like.

8. Apparatus according to any one of claims 1 to 7, characterised in that the housing is an extruded profile, for example made of aluminium.

9. Apparatus according to any one of claims 1 to 8, characterised in that the supporting and guiding body (14) is an extruded profile, the interior (14a) having two guiding spaces (14f, 14g) for the carriage (21).

10. Apparatus according to any one of claims 1 to 9, characterised in that the housing (14) is closed.

11. Apparatus according to any one of claims 1 to 10, characterised in that the glass surface is in the form of a window (17).

12. Apparatus according to any one of claims 1 to 11, characterised in that in the interior (14e) of the housing (14) there are provided guiding elements, for example rails, recesses (14f, 14g) or the like.

13. Apparatus according to any one of claims 1 to 12, characterised in that the housing (14) extends at least over the width of the carding machine (working width).

14. Apparatus according to any one of claims 1 to 13, characterised in that a travelling slide, carriage (21) or the like is guided by means of the guiding elements (14f, 14g).

15. Apparatus according to any one of claims 1 to 14, characterised in that the camera (18) and the illuminating means (19), for example light-emitting diodes, are arranged on or at the travelling slide, carriage (21) or the like.

16. Apparatus according to any one of claims 1 to 15, characterised in that with the travelling slide, carriage (21) or the like there is associated a conveying and transporting device (25, 26, 27) for displacement (B, C).

17. Apparatus according to any one of claims 1 to 16, characterised in that the conveying and transporting device comprises two deflecting pulleys (25, 26) and a rope (28) or belt having a device for engaging the travelling slide, carriage (21) or the like.

18. Apparatus according to any one of claims 1 to 17, characterised in that with one deflecting pulley (25) there is associated a drive device, for example a drive motor (28).

19. Apparatus according to any one of claims 1 to 18, characterised in that the drive device (28) is connected to an electronic control device (30).

20. Apparatus according to any one of claims 1 to 19, characterised in that with the control device (28) there are associated limit switches and/or sensors for the movement of the travelling slide, carriage (21) or the like back and forth.

21. Apparatus according to any one of claims 1 to 20, characterised in that the camera (18) and/or the illumination device (19) is/are connected, by means of at least one flexible cable (29; 31, 32), for example resilient helical cable, flat-conductor cable or the like, having a connection device, for example to an evaluating device, energy supply or the like.

22. Apparatus according to any one of claims 1 to 21, characterised in that the cable (29; 31, 32) is ducted through openings in the wall of the housing (14).

23. Apparatus according to any one of claims 1 to 22, characterised in that the duct has a seal against dust.

24. Apparatus according to any one of claims 1 to 23, characterised in that the flexible cable (29; 31, 32) is provided in the interior of the housing (14).

25. Apparatus according to any one of claims 1 to 24, characterised in that with the opening in the housing wall there is associated at least one plug connection for the cable (29; 31, 32).

26. Apparatus according to any one of claims 1 to 25, characterised in that the cable comprises a line (31) for the camera (18) and a line (32) for the illumination device (19).

27. Apparatus according to any one of claims 1 to 26, characterised in that at least one sealed end face of the housing (14) is arranged to be removable.

28. Apparatus according to any one of claims 1 to 27, characterised in that the supporting and guiding element (16) is arranged to be movable in and out below the stripper roller (6).

29. Apparatus according to any one of claims 1 to 28, characterised in that the housing (14) is arranged to be movable in and out below the stripper roller (6).

30. Apparatus according to any one of claims 1 to 29, characterised in that the supporting and guiding element (14) is arranged to be displaceable in its longitudinal direction.

31. Apparatus according to any one of claims 1 to 30, characterised in that the machine frame has, in the web take-off region, at the sides, openings for securing the supporting and guiding element (14).

32. Apparatus according to any one of claims 1 to 31, characterised in that the supporting and guiding element is arranged to be movable through the openings.

33. Apparatus according to any one of claims 1 to 32, characterised in that the cable connection (29; 31) to the camera (18) has at least one multi-conductor plug.

34. Apparatus according to any one of claims 1 to 33, characterised in that the drive device (28) for the carriage (21) is arranged outside (c) the housing (14).

35. Apparatus according to any one of claims 1 to 34, characterised in that the multi-conductor plug(s) is/are arranged at an end face of the housing (14).

36. Apparatus according to any one of claims 1 to 35, characterised in that clean compressed air is applied to the interior of the housing.

37. Apparatus according to any one of claims 1 to 36, characterised in that cooling openings are provided in the housing wall for the passage of air.

38. Apparatus at a carding machine, for detecting undesired particles, especially pieces of trash, neps, husk neps, burls and the like, in textile fibre material, for example cotton, synthetic fibres and the like, wherein a measurement zone is provided after the nip rollers for the fibre material, there being arranged at the measurement zone a camera, for example a diode line camera, for determination of the degree of contamination and the apparatus having an illumination device and an electronic evaluating device (image-processing unit), especially according to any one of claims 1 to 39, characterised in that the camera (18', 18") is arranged between the nip rollers (7, 8) and the sliver-forming device (9).

39. Apparatus according to any one of claims 1 to 38, characterised in that the camera is associated with the free fibre web passing between the nip rollers (7, 8) and the sliver-forming device (9).

40. Apparatus according to any one of claims 1 to 39, characterised in that the camera (18', 18") is arranged spaced apart from the outer surfaces of the nip rollers (7, 8).

41. Apparatus according to any one of claims 1 to 40, characterised in that the camera (18') is arranged below the fibre web.

42. Apparatus according to any one of claims 1 to 41, characterised in that the camera (18") is arranged above the fibre web.

43. Apparatus according to any one of claims 1 to 42, characterised in that at least one angled mirror (20) is arranged between the camera (18) and the fibre web (16).

44. Apparatus according to any one of claims 1 to 43, characterised in that at least one angled mirror (20) is arranged between the illumination device (19; 19a, 19b) and the fibre web (16).

45. Apparatus according to any one of claims 1 to 44, characterised in that the camera (18) is directed towards the fibre web (16) detached from the take-off roller (6).

46. Apparatus according to any one of claims 1 to 45, characterised in that the beam of light being directed from the illumination device (19) or the angled mirror (20) towards the fibre web (16) illuminates a region of the glass window (17).

47. Apparatus according to any one of claims 1 to 46, characterised in that at least the camera (18), the illumination device (19), an image-evaluating device (20) and the drive device (28) for the carriage (21) are connected to the electronic control and regulation device (30).

48. Apparatus according to any one of claims 1 to 47, characterised in that a flexible flat-conductor cable (29) is provided for the connecting line (31) to the camera (18) and for the connecting line (32) to the illumination device (19).

49. Apparatus according to any one of claims 1 to 48, characterised in that the angled mirror (20) is secured on or to the slide, carriage (21) or the like.

50. Apparatus according to any one of claims 1 to 49, characterised in that the camera (18) views the region of the fibre web (16) sliding over the glass window (17).

51. Apparatus especially according to any one of claims 1 to 50, characterised in that the camera (18) and/or the illumination device (19) is/are arranged in fixed position and optical waveguides (34, 35), for example glass fibre cables, are connected to the camera (18) and/or to the illumination device (19).

52. Apparatus according to any one of claims 1 to 51, characterised in that the camera (18) views the fibre web (16) by means of reflected light.

53. Apparatus according to any one of claims 1 to 52, characterised in that a transmitted light and reflected light determination is carried out.

54. Apparatus according to any one of claims 1 to 53, characterised in that the computer (30) and the image-evaluating means (20) are connected to an adjusting device for regulating the degree of cleaning of the fibre material (2, 16).

55. Apparatus according to any one of claims 1 to 54, characterised in that a control element (41) and an adjusting element (42) are arranged downstream of the image-evaluating means (20).

56. Apparatus according to any one of claims 1 to 55, characterised in that the adjusting element (42) is capable of changing the number of neps, trash particles and/or seed particles in the fibre web (16).

57. Apparatus according to any one of claims 1 to 56, characterised in that the camera (18) is capable of determining the number of neps in the free fibre web (16) detached from the roller.

58. Apparatus according to any one of claims 1 to 57, characterised in that the adjusting element (42) is capable of changing the number of neps in the fibre web (16) automatically in response to the number of neps determined in the detached free fibre web (16).

59. Apparatus according to any one of claims 1 to 57, characterised in that the adjusting element (42) is capable of adjusting the spacing between the clothing of the bars of the card top (13) and the clothing of the cylinder (4).

60. Apparatus according to any one of claims 1 to 58, characterised in that the adjusting element (42) is capable of adjusting the speed of rotation of the cylinder (4).

## Revendications

1. Dispositif sur une carde en vue de la détection de particules parasites, en particulier, fragments de détritus, lentes, enveloppes de lentes, noeuds et analogues dans un produit textile fibreux, par exemple coton, fibres chimiques et analogues, dans lequel une voie de mesure est prévue entre le cylindre racleur et les cylindres broyeurs pour le produit fibreux, sur la voie de mesure étant disposée une caméra, par exemple une caméra à barrette de diodes, en vue de la détection du degré d'encrassement, le dispositif comportant un dispositif d'éclairage et un dispositif d'évaluation électronique (unité de traitement d'image) et la caméra étant associée au voile de carde passant entre le cylindre racleur et les cylindres broyeurs, caractérisé en ce qu'au-dessous du cylindrer racleur (6) est disposé un corps d'appui et de guidage (14) stationnaire pour le produit fibreux (16), dont la surface supérieure (14a) est tournée vers le cylindre racleur (6), le corps d'appui et de guidage (14) étant réalisé sous la forme d'un boîtier et la caméra étant disposée à l'intérieur (14e) du boîtier.

2. Dispositif selon la revendication 1, caractérisé en ce que la caméra (18) est disposée écartée de la garniture (6a) du cylindre racleur (6) et des surfaces latérales des cylindres broyeurs (7, 8).

3. Dispositif selon la revendication 1 ou 2, caractérisé en ce que la caméra (18) est disposée sur le côté du voile de carde (16) éloigné du cylindre racleur (6).

4. Dispositif selon l'une quelconque des revendications 1 à 3, caractérisé en ce que la caméra (18) est disposée sur le côté du voile de carde éloigné d'un cylindre broyeur (7).

5. Dispositif selon l'une quelconque des revendications 1 à 4, caractérisé en ce que la caméra (18) est disposée au-dessous du cylindre racleur (6).

6. Dispositif selon l'une quelconque des revendications 1 à 5, caractérisé en ce qu'une région terminale (14b) est disposée dans la région entre le cylindre racleur (6) et les cylindres broyeurs (7, 8).

7. Dispositif selon l'une quelconque des revendications 1 à 6, caractérisé en ce que la paroi supérieure (14i) de l'élément d'appui et de guidage (14) présente une zone transparente (6, 7), par exemple en verre ou analogue.

8. Dispositif selon l'une quelconque des revendications 1 à 7, caractérisé en ce que le boîtier est un profilé extrudé, par exemple en aluminium.

9. Dispositif selon l'une quelconques des revendications 1 à 8, caractérisé en ce que l'élément d'appui et de guidage (14) est un profilé extrudé, l'intérieur (14a) présentant deux chambres de guidage (14f, 14g) pour le chariot (21).

10. Dispositif selon l'une quelconque des revendications 1 à 9, caractérisé en ce que le boîtier (14) est fermé.

11. Dispositif selon l'une quelconque des revendications 1 à 10, caractérisé en ce que la surface de verre est réalisée sous forme de fenêtre (17).

12. Dispositif selon l'une quelconque des revendications 1 à 11, caractérisé en ce qu'à l'intérieur (14e) du boîtier (14) sont disposés des éléments de guidage, par exemple des rails, des évidements (14f, 14g) ou analogues.

13. Dispositif selon l'une quelconque des revendications 1 à 12, caractérisé en ce que le boîtier (14) s'étend au moins sur la largeur de la carde (largeur de travail).

14. Dispositif selon l'une quelconque des revendications 1 à 13, caractérisé en ce qu'un traîneau, chariot (21) ou analogue est guidé par les éléments de guidage (14f, 14g).

15. Dispositif selon l'une quelconque des revendications 1 à 14, caractérisé en ce que la caméra (18) et l'éclairage (19), par exemple des diodes électroluminescentes, sont disposées sur le traîneau, le chariot (21) ou analogue.

16. Dispositif selon l'une quelconque des revendications 1 à 15, caractérisé en ce qu'au traîneau, chariot (21) ou analogue, est associé un dispositif d'acheminement et de transport (25, 26, 27) en vue du déplacement (B, C).

17. Dispositif selon l'une quelconque des revendications 1 à 16, caractérisé en ce que le dispositif d'acheminement et de transport comprend deux rouleaux de renvoi (25, 26) et un câble (27) ou une courroie avec un élément d'entraînement pour le traîneau, le chariot (21) ou analogue.

18. Dispositif selon l'une quelconque des revendications 1 à 17, caractérisé en ce qu'à un rouleau de renvoi (25) est associé un dispositif d'entraînement, par exemple un moteur d'entraînement (28).

19. Dispositif selon l'une quelconque des revendications 1 à 18, caractérisé en ce que le dispositif d'entraînement (28) est relié à un dispositif de commande électronique (30).

20. Dispositif selon l'une quelconque des revendications 1 à 19, caractérisé en ce qu'au dispositif de commande (30) sont associés des interrupteurs fin de course et/ou des capteurs pour le mouvement en va-et-vient du traîneau, chariot (21) ou analogue.

21. Dispositif selon l'une quelconque des revendications 1 à 20, caractérisé en ce que la caméra (18) et/ou le dispositif d'éclairage (19) est relié par au moins un câble flexible (29 ; 31, 32), par exemple un câble extensible, un câble plat ou analogue, à un dispositif de raccordement, par exemple à un dispositif d'évaluation, une alimentation en énergie ou analogue.

22. Dispositif selon l'une quelconque des revendications 1 à 21, caractérisé en ce que le câble (29 ; 31, 32) est guidé à travers des ouvertures de la paroi du boîtier (14).

23. Dispositif selon l'une quelconque des revendications 1 à 22, caractérisé en ce que le passage présente une étanchéité contre la poussière.

24. Dispositif selon l'une quelconque des revendications 1 à 23, caractérisé en ce que le câble flexible (29 ; 31, 32) se trouve à l'intérieur du boîtier (14).

25. Dispositif selon l'une quelconque des revendications 1 à 24, caractérisé en ce qu'à l'ouverture dans la paroi du boîtier est associée au moins une liaison par enfichage pour le câble (29 ; 31, 32).

26. Dispositif selon l'une quelconque des revendications 1 à 25, caractérisé en ce que le câble comprend un fil (31) pour la caméra (18) et un fil (32) pour le dispositif d'éclairage (19).

27. Dispositif selon l'une quelconque des revendications 1 à 26, caractérisé en ce qu'au moins une surface frontale étanche du boîtier (14) peut être retirée.

28. Dispositif selon l'une quelconque des revendications 1 à 27, caractérisé en ce qu'élément d'appui et de guidage (16) peut être inséré et retiré au-dessous du cylindre racleur (6).

29. Dispositif selon l'une quelconque des revendications 1 à 28, caractérisé en ce que le boîtier (14) peut être inséré et retiré au-dessous du cylindre racleur (6).

30. Dispositif selon l'une quelconque des revendications 1 à 29, caractérisé en ce que l'élément d'appui et de guidage (16) est déplaçable dans le sens de sa longueur.

31. Dispositif selon l'une quelconque des revendications 1 à 30, caractérisé en ce que le bâti de machine présente latéralement, à proximité du prélèvement de la toison, des ouvertures en vue de la fixation de l'élément d'appui et de guidage (14).

32. Dispositif selon l'une quelconque des revendications 1 à 31, caractérisé en ce que l'élément d'appui et de guidage peut être introduit à travers les ouvertures.

33. Dispositif selon l'une quelconque des revendications 1 à 32, caractérisé en ce que la liaison de câble (29 ; 31) à la caméra (18) comporte au moins une fiche multiple.

34. Dispositif selon l'une quelconque des revendications 1 à 33, caractérisé en ce que le dispositif d'entraînement (28) pour le chariot (21) est disposé à l'extérieur (c) du boîtier (14).

35. Dispositif selon l'une quelconque des revendications 1 à 34, caractérisé en ce que la ou les fiches multiples sont disposées sur une paroi frontale du boîtier (14).

36. Dispositif selon l'une quelconque des revendications 1 à 35, caractérisé en ce que l'intérieur du boîtier est alimenté par de l'air comprimé propre.

37. Dispositif selon l'une quelconque des revendications 1 à 36, caractérisé en ce que dans la paroi du boîtier sont prévues des ouvertures de refroidissement pour une traversée d'air.

38. Dispositif sur une carde en vue de la détection de particules parasites, en particulier fragments de détritus, lentes, enveloppes de lentes, noeuds et analogues, dans un produit textile fibreux, par exemple coton, fibres chimiques et analogue, dans lequel est prévue une voie de mesure en aval des cylindres broyeurs du produit textile, sur la voie de mesure étant disposée une caméra, par exemple une caméra à barrette de diodes en vue de la détection du degré d'encrassement et le dispositif comportant un dispositif d'éclairage et un dispositif d'évaluation électronique (unité de traitement d'image), en particulier selon l'une quelconque des revendications 1 à 39, caractérisé en ce que la caméra (18', 18") est disposée entre les cylindres broyeurs (7, 8) et le dispositif de formation de bande (9).

39. Dispositif selon l'une quelconque des revendications 1 à 38, caractérisé en ce que la caméra est associée au voile de carde se déplaçant librement entre les cylindres broyeurs (7, 8) et le dispositif de formation de bande (9).

40. Dispositif selon l'une quelconque des revendications 1 à 39, caractérisé en ce que la caméra (18', 18") est disposée espacée des parois latérales des cylindres broyeurs (7, 8).

41. Dispositif selon l'une quelconque des revendications 1 à 40, caractérisé en ce que la caméra (18') est disposée au-dessous du voile de carde.

42. Dispositif selon l'une quelconque des revendications 1 à 41, caractérisé en ce que la caméra (18") est disposée au-dessus du voile de carde.

43. Dispositif selon l'une quelconque des revendications 1 à 42, caractérisé en ce qu'entre la caméra (18) et le voile de carde (16) est disposé au moins un miroir de renvoi (20).

44. Dispositif selon l'une quelconque des revendications 1 à 43, caractérisé en ce qu'entre le dispositif d'éclairage (19 ; 19a, 19b) et le voile de carde (16) est disposé au moins un miroir de renvoi (20).

45. Dispositif selon l'une quelconque des revendications 1 à 44, caractérisé en ce que la caméra (18) est alignée sur le voile de carde (16) détaché du cylindre racleur (6).

46. Dispositif selon l'une quelconque des revendications 1 à 45, caractérisé en ce que le rayon lumineux provenant du dispositif d'éclairage (19) ou du miroir de renvoi (20) en direction du voile de carde (16) éclaire uniformément la surface de verre (17).

47. Dispositif selon l'une quelconque des revendications 1 à 46, caractérisé en ce qu'au dispositif de commande et de régulation électronique (30) sont reliés au moins la caméra (18), le dispositif d'éclairage (19), un dispositif d'évaluation d'image (20) et le dispositif d'entraînement (28) pour le chariot (21).

48. Dispositif selon l'une quelconque des revendications 1 à 47, caractérisé en ce qu'un câble plat flexible (29) est prévu pour la ligne de liaison (31) à la caméra (18) et pour la ligne de liaison (32) au dispositif d'éclairage (19).

49. Dispositif selon l'une quelconque des revendications 1 à 48, caractérisé en ce que le miroir de renvoi (20) est fixé sur ou au traîneau, chariot (21) ou analogue.

50. Dispositif selon l'une quelconque des revendications 1 à 49, caractérisé en ce que la caméra (18) détecte uniformément le voile de carde (16) glissant au-dessus de la fenêtre de verre (17).

51. Dispositif en particulier selon l'une quelconque des revendications 1 à 50, caractérisé en ce que la caméra (18) et/ou le dispositif d'éclairage (19) sont stationnaires et à la caméra (18) et/ou au dispositif d'éclairage (19) sont reliés des guides d'onde de lumière (34, 35), par exemple des câbles à fibres de verre.

52. Dispositif selon l'une quelconque des revendications 1 à 51, caractérisé en ce que la caméra (18) détecte le voile de carde (16) avec une lumière incidente.

53. Dispositif selon l'une quelconque des revendications 1 à 52, caractérisé en ce qu'une détection est effectuée à l'aide d'une lumière par transmission et d'une lumière incidente.

54. Dispositif selon l'une quelconque des revendications 1 à 53, caractérisé en ce que le calculateur (30) et l'évaluation d'image (20) sont réunis à un dispositif de réglage en vue de la régulation du degré de propreté du matériau fibreux (2, 16).

55. Dispositif selon l'une quelconque des revendications 1 à 54, caractérisé en ce qu'en aval de l'évaluation d'image (20) sont disposés un élément de commande (41) et un élément de réglage (42).

56. Dispositif selon l'une quelconque des revendications 1 à 55, caractérisé en ce que l'élément de réglage (42) peut modifier le nombre de lentes, de particules de détritus et/ou de particules de graines dans le voile de carde (16).

57. Dispositif selon l'une quelconque des revendications 1 à 56, caractérisé en ce que la caméra (18) peut détecter le nombre de lentes dans le voile de carde (16) libre, détaché du cylindre.

58. Dispositif selon l'une quelconque des revendications 1 à 57, caractérisé en ce que l'élément de réglage (42) peut modifier automatiquement le nombre de lentes dans le voile de carde (16) en réaction au nombre de lentes détecté dans le voile de carde libre, détaché (16).

59. Dispositif selon l'une quelconques des revendications 1 à 57, caractérisé en ce que l'élément de réglage (42) permet de régler l'écartement entre la garniture des baguettes supérieures du couvercle (13) et la garniture du tambour (4).

60. Dispositif selon l'une quelconque des revendications 1 à 58, caractérisé en ce que l'élément de réglage (42) permet de régler la vitesse de rotation du tambour (4).
